# EUROPÄISCHE PATENTSCHRIFT

(11) **EP 2 783 616 B1**
(45) Veröffentlichungstag und Bekanntmachung des Hinweises auf die Patenterteilung: **18.05.2016**
(21) Anmeldenummer: 14000900.2
(22) Anmeldetag: 13.03.2014
(51) Int. Cl.: A47L 9/18

(54) **Abscheider, Abscheideeinrichtung mit einem solchen Abscheider sowie Staubsauger, insbesondere Nasssauger, mit einem solchen Abscheider beziehungsweise einer solchen Abscheideeinrichtung**
Separator, separating device incorporating such a separator and vacuum cleaner, in particular suction apparatus for liquids, with such a separator or separating device
Séparateur, dispositif de séparation doté d'un tel séparateur et aspirateur, notamment aspirateur à eau, doté d'un tel séparateur ou d'un tel dispositif de séparation

(30) Priorität: 25.03.2013 DE 102013005306
(43) Veröffentlichungstag der Anmeldung: 01.10.2014
(73) Patentinhaber: PROAIR GmbH Gerätebau, 88260 Argenbühl-Eglofs (DE)
(72) Erfinder: Roth, Paul, Dipl.-Ing., 88316 Isny (DE)
(74) Vertreter: Kohl, Karl-Heinz

(56) Entgegenhaltungen:
- US-A- 5 090 974
- US-A1- 2004 068 826

## Beschreibung

Die Erfindung betrifft einen Abscheider für einen Staubsauger, insbesondere einen Nasssauger, nach dem Oberbegriff des Anspruches 1, eine Abscheideeinrichtung mit einem solchen Abscheider nach dem Oberbegriff des Anspruches 11 sowie einen Staubsauger nach Anspruch 16 bzw. 17.

Abscheider bzw. Abscheideeinrichtungen werden bei Staubsaugern, insbesondere bei Nasssaugern, eingesetzt. Abscheider bzw. Abscheideeinrichtungen haben die Aufgabe, die in der angesaugten Luft ggf. noch enthaltenen Reste an Schmutz/Staubteilchen zurückzuhalten, bevor die Luft aus dem Staubsauger wieder nach außen tritt. Die Abscheider sitzen drehfest auf der Motorwelle und drehen mit hoher Drehzahl. Um die Abscheider einzubauen, werden sie mit Hilfe einer Mutter oder Schraubverbindung befestigt. Der Einsatz der Befestigungselemente erschwert die Montage des Abscheiders. Nachteilig ist, dass sich das Befestigungselement aufgrund der Beschleunigung des Abscheiders beim Betrieb des Staubsaugers festziehen kann. Dann lässt sich der Abscheider zum Reinigen nur noch mit hohem Kraftaufwand oder sogar nur unter Zuhilfenahme eines Hilfswerkzeuges abnehmen. Die Stege des Abscheiders werden durch einen Flanschring zusammen gehalten, der einstückig mit den Stegen ausgebildet ist. Aufgrund der hohen Fliehkräfte beim Einsatz des Staubsaugers kommt es häufig zum Brechen an produktionsbedingten Fließnähten des als Spritzgussteil ausgebildeten Abscheiders. Um dies zu vermeiden, sind aufwändige Verstärkungsringe, wie Bördelringe oder Drahtringe, erforderlich, die die Herstellung des Abscheiders verteuern und den Reinigungsaufwand erschweren.

Das Dokument US 5 090 974 offenbart einen Abscheider gemäß dem Oberbegriff des Anspruchs 1. In diesem Abscheider werden die Stege aus einem steifen Material hergestellt, und sie bleiben an ihrem vom Abdeckteil abgewandten Ende ohne Verbindung untereinander.

Der Erfindung liegt die Aufgabe zugrunde, den gattungsgemäßen Abscheider, die gattungsgemäße Abscheideeinrichtung sowie den Staubsauger so auszubilden, dass bei kostengünstiger Herstellung eine einfache und dennoch zuverlässige Montage des Abscheiders möglich ist.

Diese Aufgabe wird beim gattungsgemäßen Abscheider erfindungsgemäß mit den kennzeichnenden Merkmalen des Anspruches 1, bei der gattungsgemäßen Abscheideeinrichtung erfindungsgemäß mit den kennzeichnenden Merkmalen des Anspruches 11 und beim Staubsauger mit den Merkmalen des Anspruches 16 bzw. 17 gelöst.

Beim erfindungsgemäßen Abscheider sind die Lamellen nur an einem Ende am Abdeckteil gehalten, während sie am anderen Ende ohne Verbindung zueinander oder sonstiger Befestigungsteile sind. Da die Stege flexibel ausgebildet sind, kann die Verbindung zwischen dem Abscheider und dem Spider sehr einfach hergestellt werden. Der Abscheider wird hierbei so montiert, dass die Stege in der Einbaulage unter entsprechender radialer Vorspannung stehen. Da der Abscheider im Betrieb des Staubsaugers mit hoher Drehzahl dreht, wirken auf die Stege große Fliehkräfte. Durch sie werden die Stege mit ihren freien Enden radial nach außen belastet, wodurch die Verbindung zusätzlich gesichert wird. Je höher die Drehzahl und damit die Fliehkräfte sind, desto stärker ist die selbstsichernde Wirkung.

Vorteilhaft sind mindestens zwei der Stege am freien Ende mit wenigstens einer Rastkontur versehen, über die der erfindungsgemäße Abscheider einfach über eine Rastverbindung gehalten werden kann.

Bei einer vorteilhaften Ausführungsform hat die Rastkontur des Abscheiders gleiche Breite wie der Steg, an dem er vorgesehen ist. Die Rastkontur ist dadurch ausreichend breit, so dass eine sichere Verrastung gewährleistet ist.

Die Rastkontur kann bei einer anderen Ausführungsform auch so ausgebildet sein, dass sie sich über wenigstens zwei benachbarte Stege erstreckt. Die Rastkontur weist dadurch eine größere Breite in Umfangsrichtung auf, was sich vorteilhaft auf die Sicherheit der Rastverbindung auswirkt.

Die Rastkonturen sind vorteilhaft einstückig mit dem Steg ausgebildet, wodurch sich eine sehr kostengünstige Fertigung für den Abscheider ergibt.

Vorteilhaft ist die Rastkontur ein Rastvorsprung.

Der Abscheider kann so ausgebildet sein, dass jeder Steg am freien Ende mit einer Rastkontur versehen ist. Dann sind alle Stege bei montiertem Abscheider über die Rastverbindung gehalten. Es besteht aber auch die Möglichkeit, nur einen Teil der Stege, mindestens jedoch zwei Stege, jeweils mit einer Rastkontur zu versehen. Ist nur ein Teil der Stege mit einer Rastkontur versehen, dann sind diese Stege so am Abscheider vorgesehen, dass ein zuverlässiger Einbau und eine zuverlässige Sicherung mittels der Rastkonturen gewährleistet ist.

Es ist weiter möglich, über den Umfang des Abscheiders verteilt unterschiedlich gestaltete Rastkonturen zu verwenden. So kann ein Teil der Stege mit Rastkonturen versehen sein, die gleiche Breite wie diese haben, während ein anderer Teil der Rastkonturen so ausgebildet ist, dass sie sich über zwei, drei oder mehr Stege erstrecken. Auf diese Weise kann die Art der Rastverbindung an den jeweiligen Einsatzfall des Abscheiders angepasst werden.

Damit die Rastverbindung zuverlässig erreicht wird, ist der Rastvorsprung vorteilhaft mit einer Schrägfläche versehen, die an der vom Steg abgewandten Seite des Rastvorsprunges vorgesehen ist. Wird daher der Abscheider in Achsrichtung in seine Einbaulage geschoben, dann gelangt die Schrägfläche des jeweiligen Rastvorsprunges auf ein entsprechendes Gegenrastelement, wobei die Schrägfläche dafür sorgt, dass der zugehörige Steg quer zu seiner Längsrichtung elastisch gebogen wird.

Damit die Rastverbindung zuverlässig hält, ist bei einer bevorzugten Ausführungsform der Rastvorsprung an seiner dem Steg zugewandten Seite mit einer Sperrfläche versehen. Sie sorgt dafür, dass die Rastverbindung nicht unbeabsichtigt gelöst werden kann.

Bei einer bevorzugten Ausführungsform erstrecken sich die Stege vom Abdeckteil aus schräg nach außen. Der Abscheider hat dadurch eine durch die Stege gebildete Kegelwand. Die Schrägstellung der Stege führt in vorteilhafter Weise dazu, dass die Stege bei eingebautem Abscheider unter ausreichend hoher radialer Vorspannung gehalten sind, wodurch die Sicherheit der Rastverbindung unterstützt wird.

Der Abscheider kann auch so ausgebildet sein, dass die Stege auf einem Zylindermantel liegen. Durch die im Betrieb auftretenden hohen Fliehkräfte werden die Stege radial nach außen elastisch gebogen.

Der Abscheider ist bevorzugt mit wenigstens einem Formschlusselement versehen, das zu einer einfache Montage beiträgt. Über das Formschlusselement kann der Abscheider in einfacher Weise positionsgenau eingebaut werden.

Bei der erfindungsgemäßen Abscheideeinrichtung ist der Spider mit wenigstens einem Mitnahmeelement versehen, an dem die Stege des Abscheiders im Betrieb unter Radialkraft anliegen.

Das Mitnahmeelement ist bevorzugt als Ring ausgebildet, der von der Rastkontur des Abscheiders untergriffen wird. Die ringförmige Ausbildung des Mitnahmeelementes bietet sich dann an, wenn sämtliche Stege des Abscheiders am freien Ende mit der Rastkontur versehen sind. Dann können die Rastkonturen aller Stege in einfacher Weise mit dem ringförmigen Mitnahmeelement zusammenwirken.

Das Mitnahmeelement kann bei einer anderen Ausführungsform als Ringflansch ausgebildet sein, der mit Rastöffnungen für die Rastkonturen versehen ist. Eine solche Ausbildung des Spiders ist dann von Vorteil, wenn nicht alle, sondern nur einige der Stege des Abscheiders mit einer Rastkontur versehen sind. Die entsprechenden Rastkonturen rasten dann in die Rastöffnungen des Spiders ein.

Die quer zu ihrer Längsrichtung elastisch nachgiebigen Stege werden beim Aufsetzen des Abscheiders auf den Spider zunächst radial nach innen gebogen, bis die entsprechenden Rastkonturen das Mitnahmeelement des Spiders untergreifen können. Dabei sind die Abmessungen so gewählt, dass die Stege in der Einbaulage unter radialer Vorspannung am Mitnahmeelement anliegen.

Die Stege des Abscheiders müssen keine Rastkonturen haben. In diesem Fall wird das Mitnahmeelement vorteilhaft durch einen Ringflansch gebildet, dessen Wandung radial nach innen geneigt ist. Die Stege liegen unter den im Betrieb auftretenden hohen Fliehkräften mit großer Radialkraft flächig an der Innenseite des Ringflansches an. Die Fliehkräfte sind so hoch, dass der Spider den Abscheider auch ohne Formschlussverbindung zwischen beiden Bauteilen zuverlässig mitnimmt.

Um das Aufsetzen des Abscheiders auf den Spider zu erleichtern, sind bei einer vorteilhaften Ausführungsform der Abscheider und der Spider mit miteinander zusammenwirkenden Zentrierteilen versehen, durch die eine axiale Ausrichtung des Abscheiders relativ zum Spider erreicht wird.

Die Zentrierteile sind vorteilhaft ringförmige Vorsprünge, deren Achse in der Achse des Spiders und des Abscheiders liegt. Die ringförmige Gestaltung der Zentrierteile erleichtert das Zusammenfügen von Spider und Abscheider.

Der Staubsauger nach Anspruch 16 zeichnet sich dadurch aus, dass er den aufrastbaren Abscheider aufweist.

Der Staubsauger nach Anspruch 17 hat die Abscheideeinrichtung mit dem Spider und dem aufrastbaren Abscheider.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Axialschnitt einen Motor eines Nassreinigungsgerätes mit einem erfindungsgemäßen Abscheider,
- Fig. 2: in vergrößerter Darstellung einen Teil des Motors gemäß Fig. 1,
- Fig. 3: in vergrößerter Darstellung und in Seitenansicht einen erfindungsgemäßen Abscheider,
- Fig. 4: eine Draufsicht auf den Abscheider gemäß Fig. 3,
- Fig. 5: den Abscheider gemäß Fig. 3 in perspektivischer Darstellung,
- Fig. 6: in einem Axialschnitt und in vergrößerter Darstellung eine zweite Ausführungsform eines erfindungsgemäßen Abscheiders,
- Fig. 7: in Draufsicht zwei Hälften zweier weiterer Ausführungsformen des erfindungsgemäßen Abscheiders,
- Fig. 8: eine Seitenansicht der Abscheider gemäß Fig. 7,
- Fig. 9 und Fig. 10: in Darstellungen entsprechend den Fig. 7 und 8 zwei weitere Ausführungsformen von erfindungsgemäßen Abscheidern,
- Fig. 11: eine Draufsicht auf einen Spider, an dem der erfindungsgemäße Abscheider befestigt wird,
- Fig. 12: den Spider gemäß Fig. 11 in Seitenansicht,
- Fig. 13: den Spider gemäß Fig. 11 in Unteransicht,
- Fig. 14: in stark vergrößerter Darstellung die Einzelheit XIV in Fig. 13,
- Fig. 15 und Fig. 16: jeweils in perspektivischer Darstellung den Spider gemäß Fig. 11,
- Fig. 17: eine weitere Ausführungsform eines auf einem Motor eines Nassreinigungsgerätes befestigten erfindungsgemäßen Abscheiders im Axialschnitt,
- Fig. 18: in vergrößerter Darstellung den Abscheider gemäß Fig. 17 im Axialschnitt,

- Fig. 19: eine Draufsicht auf den Abscheider gemäß Fig. 18,
- Fig. 20: in Seitenansicht eine weitere Ausführungsform eines Spiders, an dem der erfindungsgemäße Abscheider befestigt wird,
- Fig. 21: den Spider gemäß Fig. 20 in Draufsicht.

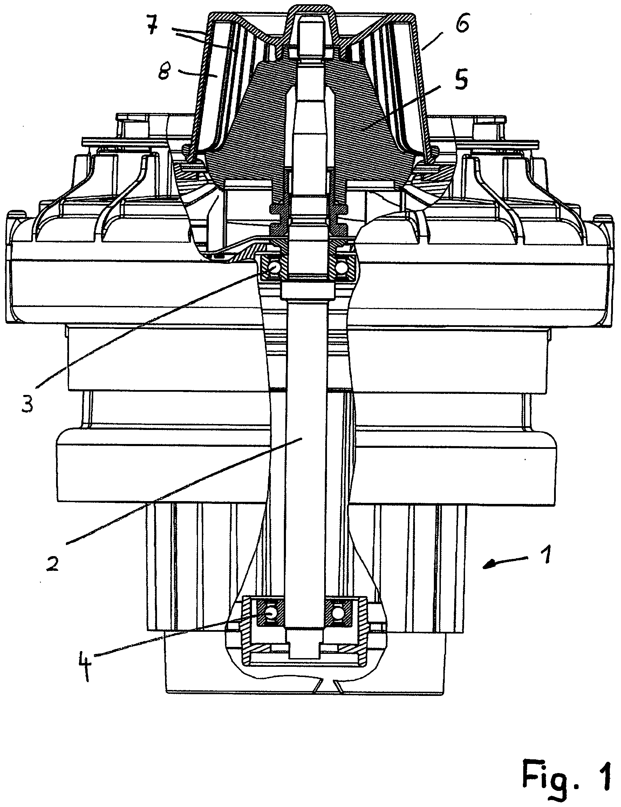

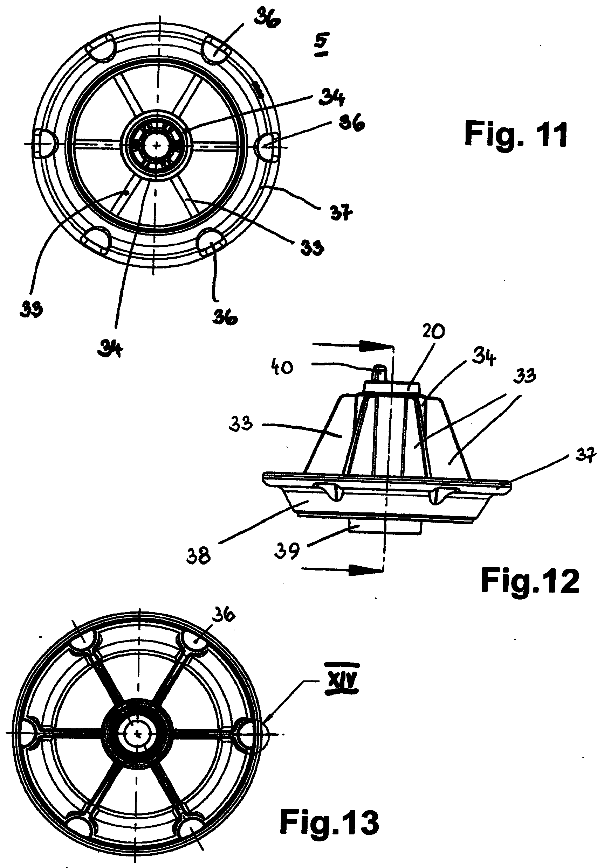

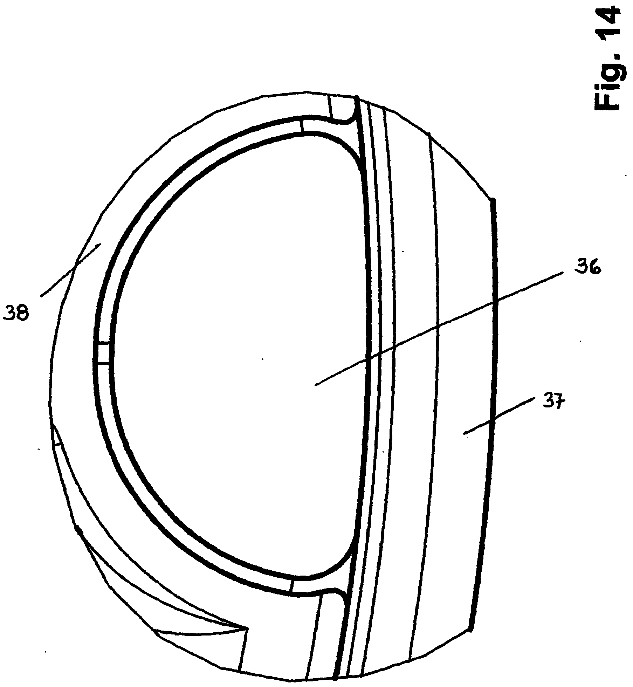

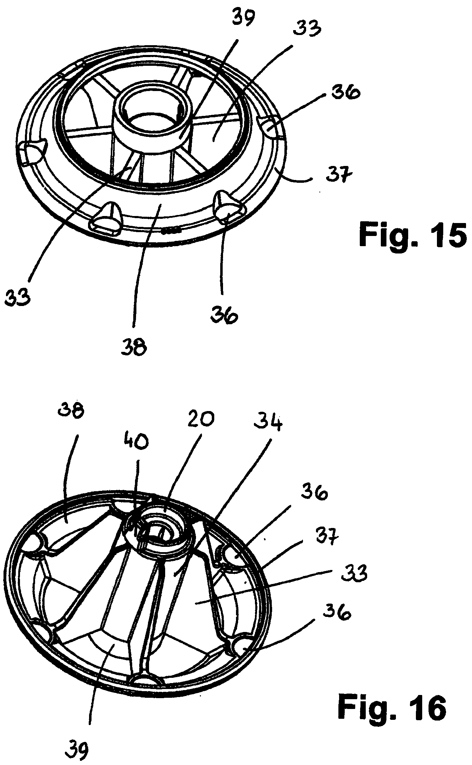

Fig. 1 zeigt einen Motor 1 für einen Staubsauger, insbesondere einen Nasssauger, der beispielsweise zum Reinigen von Böden und dergleichen eingesetzt wird. Der Nasssauger ist bekannt und wird darum im Folgenden nur kurz erläutert. Er hat ein fahrbares Gestell, auf dem ein Flüssigkeitsbehälter angeordnet ist. Der Motor 1 steht senkrecht (auf dem) im Flüssigkeitsbehälter und ist gegen die Flüssigkeit abgedichtet. Der Motor 1 hat eine aufrecht stehende Motorwelle 2, die mit Hilfe zweier Lager 3, 4, die vorteilhaft Kugellager sind, drehbar gelagert ist. Der Motor 1 ist in bekannter Weise ein Elektromotor. Auf dem oberen Ende der Motorwelle 2 sitzt drehfest ein Spider 5, der anhand der Fig. 11 bis 16 im Einzelnen beschrieben werden wird. Der Spider 5 wird von einem Abscheider 6 umgeben, der lösbar und drehfest mit dem Spider 5 verbunden ist. Der Abscheider 6 hat über seine Höhe verlaufende schlitzförmige Durchtrittsöffnungen 7, die durch schmale Stege 8 voneinander getrennt sind.

Im Einsatz des Nasssaugers wird Luft über einen Saugschlauch in den Flüssigkeitsbehälter angesaugt. Die mit Schmutz/Staubteilchen belastete Luft strömt durch die Flüssigkeit, vorzugsweise Wasser, im Flüssigkeitsbehälter. In der Flüssigkeit wird der größte Teil der in der angesaugten Luft vorhandenen Schmutz- und/oder Staubteilchen zurückgehalten. Die Luft mit dem restlichen Schmutz/Staubanteil strömt dann durch die Durchtrittsöffnungen 7 in den mit der Motorwelle 2 drehenden Abscheider 6. Der Abscheider 6 trennt eventuell noch in der Luft vorhandene Schmutz/Staubteilchen von der Luft ab, so dass an einer Luftaustrittsöffnung des Nasssaugers gereinigte Luft austritt.

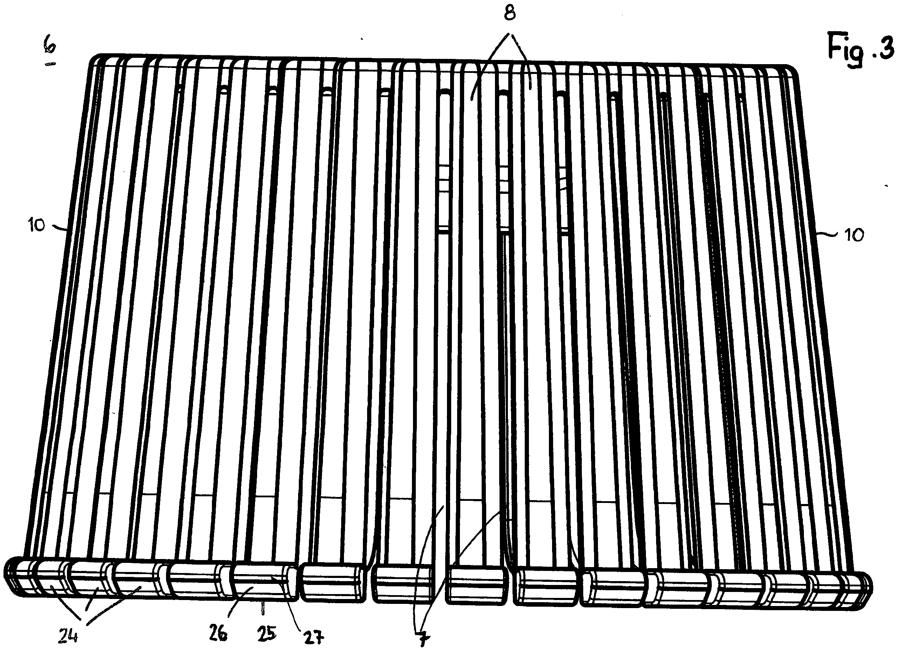

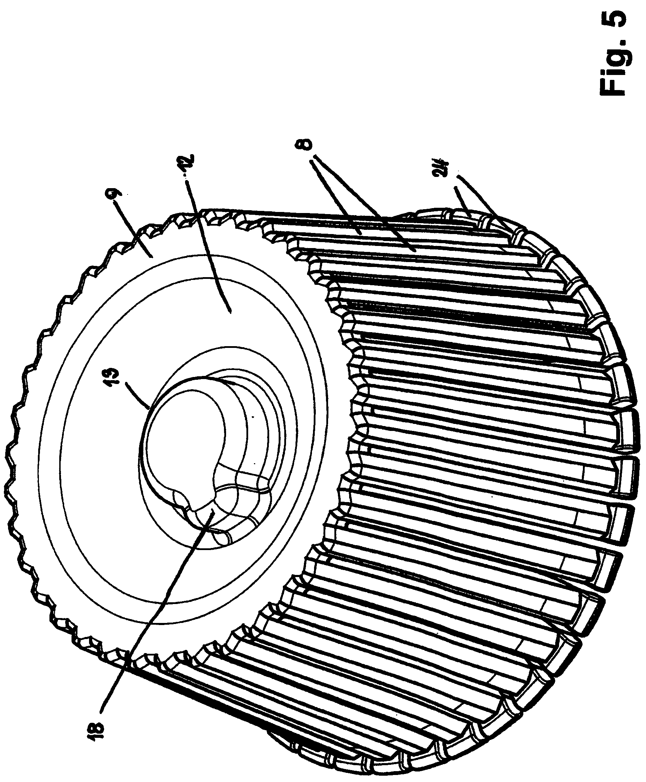

Die Fig. 3 bis 6 zeigen eine erste Ausführungsform eines Abscheiders 6. Er hat kreisförmigen Umriss und weist eine stirnseitige Abdeckung 9 auf, die kreisförmigen Umriss hat. Die Abdeckung 9 ist einstückig mit den Stegen 8 ausgebildet, die sich von der Abdeckung 9 aus erstrecken. Die Stege 8 sind unter einem kleinen Winkel schräg nach außen gerichtet, so dass der äußere Längsrand 10 der Stege 8 auf einem von der Abdeckung 9 aus sich erweiternden Kegelmantel liegt.

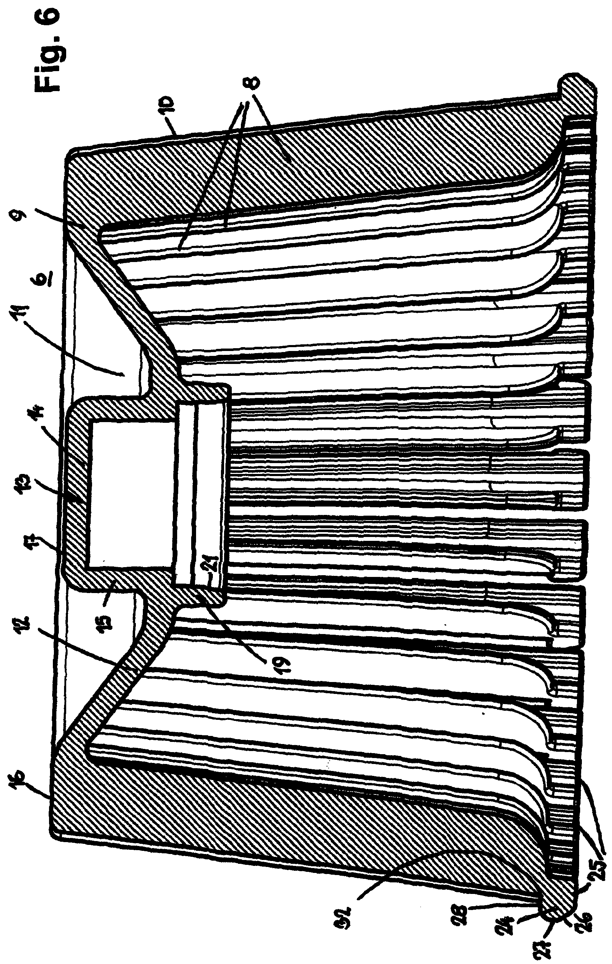

Die Abdeckung 9 hat eine ringförmige Vertiefung 11 (Fig. 6), deren Boden 12 kegelförmig ausgebildet ist. Der Boden 12 schließt an eine zentrale Erhöhung 13 an. Sie hat einen ebenen Deckel 14, an dessen Rand eine zylindrische Wand 15 anschließt. Sie ist einstückig mit dem Boden 12 der Vertiefung 11 ausgebildet. Die Erhöhung 13 ist, wie aus Fig. 6 hervorgeht, so ausgebildet, dass der Deckel 14 nicht über die Stirnseite 16 der Abdeckung 9 übersteht. Vorteilhaft ist die Stirnseite 17 des Deckels 14 gegenüber der Stirnseite 16 geringfügig zurückgesetzt.

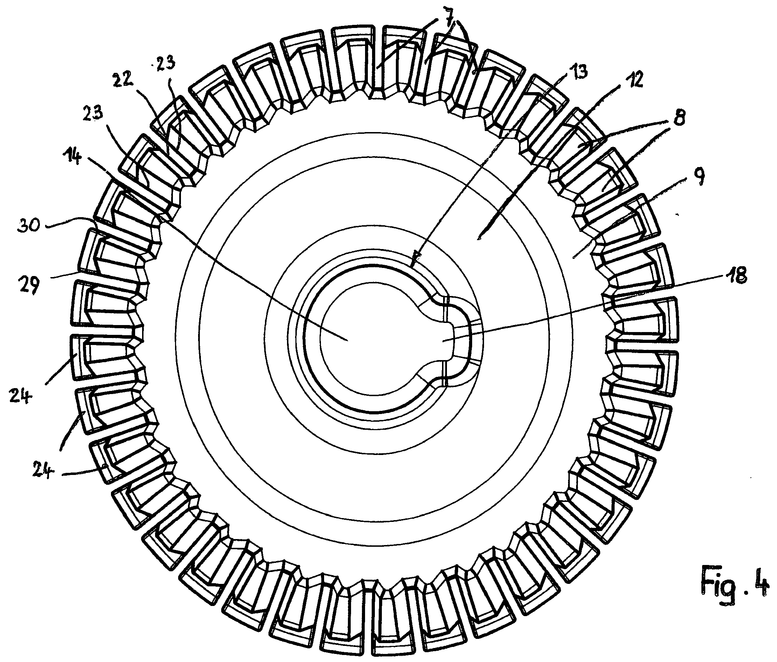

Die Erhöhung 13 ist mit einer radialen Ausbuchtung 18 versehen (Fig. 4), über die eine drehfeste Formschlussverbindung zum Spider 5 hergestellt werden kann. Die Ausbuchtung 18 ist so ausgebildet, dass sie sich über die Höhe der zylindrischen Wand 15 erstreckt. Der Spider 5 ist, wie unten noch erläutert werden wird, mit einem entsprechenden Gegenformschlusselement versehen, das beim Aufsetzen des Abscheiders 6 in die Ausbuchtung 18 eingreift und auf diese Weise die drehfeste Verbindung zwischen dem Abscheider 6 und dem Spider 5 herstellt.

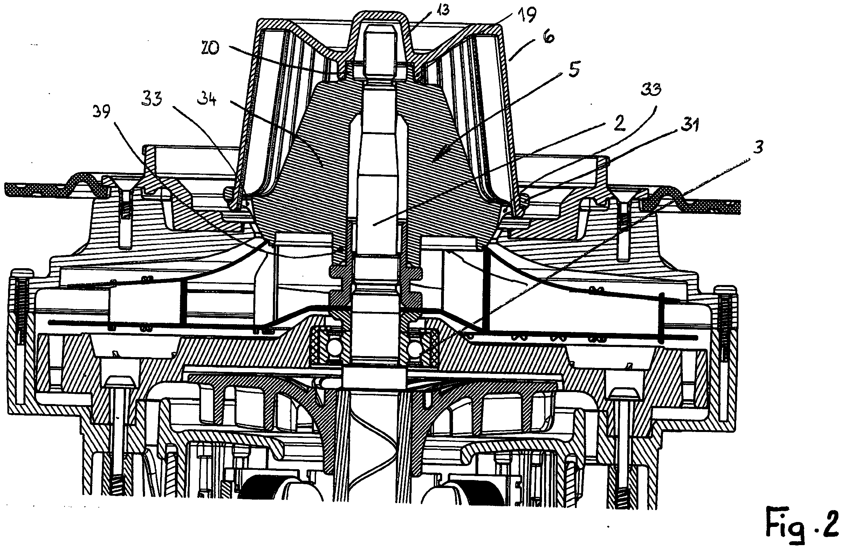

Am Übergang vom Boden 12 der Vertiefung 11 in die Wand 14 der Erhöhung 13 befindet sich ein ringförmiger Vorsprung 19, der sich vom Boden 12 aus in entgegengesetzte Richtung erstreckt wie die Wand 15 der Erhöhung 13. Der Vorsprung 19 dient als Zentrierung beim Aufsetzen des Abscheiders 6 auf den Spider 5. Wie aus Fig. 2 hervorgeht, ist der Spider 5 an seinem der Erhöhung 13 zugewandten Ende mit einem ringförmigen Vorsprung 20 versehen, der vom Vorsprung 19 des Abscheiders 6 umgriffen wird. Die beiden Vorsprünge 19, 20 liegen über ihren Umfang mit ihren einander zugewandten Mantelflächen aneinander an.

Damit der Abscheider 6 zuverlässig zentriert auf den Spider 5 aufgesetzt werden kann, ist der Vorsprung 19 an seiner Innenseite mit einer Abschrägung 21 versehen, die sich vom freien Ende des Vorsprunges 19 aus über einen Teil der axialen Höhe des Vorsprunges 19 erstreckt. Aufgrund der Abschrägung 21 erweitert sich der Innendurchmesser des Vorsprunges 19 in Richtung auf das freie Ende des Vorsprunges 19.

Der Vorsprung 20 des Spiders 5 kann mit einer entsprechenden Abschrägung an seiner Außenseite versehen sein. Es ist aber auch möglich, dass die Außenseite des Vorsprunges 20 des Spiders 5 über die gesamte axiale Höhe konisch verläuft. Aufgrund der Abschrägungen lässt sich der Abscheider 6 problemlos positionsgenau auf den Spider 5 aufsetzen. Die Ausbuchtung 18 erstreckt sich auch über die Höhe des Vorsprunges 19.

Der Abscheider 6 ist vorteilhaft einstückig aus einem geeigneten Kunststoff gefertigt.

Die Stege 8 sind untereinander gleich ausgebildet und hochkant angeordnet. Ihre Längsseiten 22, 23 (Fig. 4) liegen etwa in Radialebenen des Abscheiders 6. Zwischen den in Umfangsrichtung mit geringem Abstand hintereinander liegenden Stegen 8 sind die Durchtrittsöffnungen 7 vorgesehen, die durch die Längsseiten 22, 23 jeweils benachbarter Stege 8 begrenzt werden. Die Durchtrittsöffnungen 7 sind radial angeordnet und haben über ihre radiale Länge konstante Breite. Die Durchtrittsöffnungen 7 sind jeweils axial verlaufend vorgesehen. Die Stege 8 und damit die Durchtrittsöffnungen 7 können aber auch über ihre axiale Länge geneigt verlaufend angeordnet sein, d.h. die Stege bzw. die Durchtrittsöffnungen haben in Umfangsrichtung eine Steigung.

Die Stege 8 sind am freien Ende jeweils mit einer radial nach außen gerichteten Rastkontur versehen, die im dargestellten Ausführungsbeispiel ein Rastvorsprung 24 ist. Die Rastvorsprünge 24 sind einstückig mit den Stegen ausgebildet und untereinander gleich. Wie aus Fig. 6 hervorgeht, haben die Rastvorsprünge 24 eine ebene Unterseite 25. Bei montiertem Abscheider 6 liegen die Unterseiten 25 in einer gemeinsamen Radialebene des Abscheiders 6. An die Unterseite 25 schließt unter einem stumpfen Winkel eine Schrägfläche 26 an, die sich über einen Teil der Höhe des Rastvorsprunges 24 erstreckt, beispielsweise etwa in halbe Höhe. Die Schrägfläche 26 geht in eine schmale ebene Fläche 27 über, die bogenförmig in eine ebene Oberseite 28 des Rastvorsprunges 24 übergeht. Die Oberseite 28 liegt vorteilhaft parallel zur Unterseite 25 und erstreckt sich bis zur radial außen liegenden Längsseite 10 des zugehörigen Steges 8.

Die Rastvorsprünge 24 erstrecken sich über die Umfangsbreite des Steges 8 (Fig. 4). Die Rastvorsprünge 24 haben ebene Seitenflächen 29, 30, die, in Achsrichtung des Abscheiders gesehen (Fig. 4), in Verlängerung der Längsseiten 22, 23 der Stege 8 liegen.

Die Stege 8 sind schräg nach außen geneigt, so dass die ebenen Flächen 27 der Rastvorsprünge 24 auf einem Durchmesser liegen, der größer ist als der Außendurchmesser der Stirnseite 16 der Abdeckung 9. Der Spider 5 hat einen umlaufenden Ring 31 (Fig. 2), dessen Innendurchmesser kleiner ist als der Durchmesser der Stege 8 am Übergang 32 (Fig. 6) vom äußeren Längsrand 10 in die Oberseite 28 des Rastvorsprunges 24. Die Folge hiervon ist, dass die Stege 8 in der Einbaulage radial elastisch nach innen gebogen sind und unter Vorspannung am Ring 31 des Spiders 5 anliegen. Da die Rastvorsprünge 25 die schräg nach außen gerichteten Schrägflächen 26 haben, lässt sich der Abscheider 6 einfach und zuverlässig am Spider 5 befestigen. Beim Aufsetzen des Abscheiders 6 auf den Spider 5 werden die Stege 8 beim Steckvorgang elastisch nach innen gebogen, wenn die Rastvorsprünge 24 auf den Ring 31 des Spiders 5 treffen. Sobald die Vorsprünge 24 den Ring 31 passiert haben, federn die Stege 8 in Richtung auf ihre Ausgangsstellung zurück, bis sie im Übergangsbereich 32 unter radialer Vorspannung an der Innenseite des Ringes 31 anliegen (Fig. 2). Die Rastvorsprünge 24 untergreifen den Ring 31. Da die eine Sperrfläche bildende Oberseite 28 der Rastvorsprünge 24 eben ist, ist eine sichere Verriegelung des Abscheiders 6 am Spider 5 sichergestellt. Die zuverlässige Verrastung des Abscheiders 6 am Spider 5 wird dadurch begünstigt, dass infolge der Ausbuchtung 18 der Abscheider 6 lediglich in einer bestimmten Winkeistellung auf den Spider 5 geschoben werden kann. Der ringförmige Vorsprung 19 des Abscheiders 6 zentriert im Zusammenspiel mit dem ringförmigen Vorsprung 20 des Spiders 5 den Abscheider 6 auf dem Spider 5, was den Montagevorgang erleichtert.

Da im Betrieb des Staubsaugers der Abscheider 6 über die Motorwelle 2 und den Spider 5 mit hoher Drehzahl angetrieben wird, wirkt auf die Stege 8 eine radial nach außen gerichtete Fliehkraft. Sie sorgt dafür, dass die Stege 8 im Bereich des Überganges 32 fest gegen die Innenseite des Ringes 31 des Spiders 5 gedrückt werden, so dass während des Betriebes des Staubsaugers eine zuverlässige Verbindung zwischen dem Abscheider 6 und dem Spider 5 gewährleistet ist. Diese selbstsichernde Wirkung nimmt mit steigender Drehzahl der Motorwelle 2 und damit des Abscheiders 6 sogar noch zu. Die Montage des Abscheiders 6 ist einfach, da keine zusätzlichen Befestigungsmittel, wie Muttern, Schrauben und dergleichen, erforderlich sind. Der Abscheider 6 lässt sich auch einfach vom Spider 5 abziehen, ohne dass hierzu zusätzliche Werkzeuge erforderlich wären.

Der Ring 31 des Spiders 5 ist durch radial verlaufende Stege 33 (Fig. 2) mit einem Grundkörper 34 des Spiders 5 verbunden. Es reichen beispielhaft vier Verbindungsstege 33 aus, um den Ring 31 mit dem Grundkörper 34 zu verbinden. Diese Stege liegen dann in Winkelabständen von 90° zueinander. Bei montiertem Abscheider 6 befinden sich die Stege 33 innerhalb von entsprechenden Durchtrittsöffnungen 7 des Abscheiders 6.

Die Stege 8 des Abscheiders können jede geeignete Querschnittsform haben. So können die Stege 8 streifenförmig ausgebildet sein, aber auch etwa L-förmigen Querschnitt haben. Bei einer L-förmigen Querschnittsausbildung liegt der längere Schenkel etwa in Radialrichtung, während der abgebogene kürzere Schenkel sich in Umfangsrichtung erstreckt und an der radialen Außenseite der längeren Schenkel vorgesehen ist.

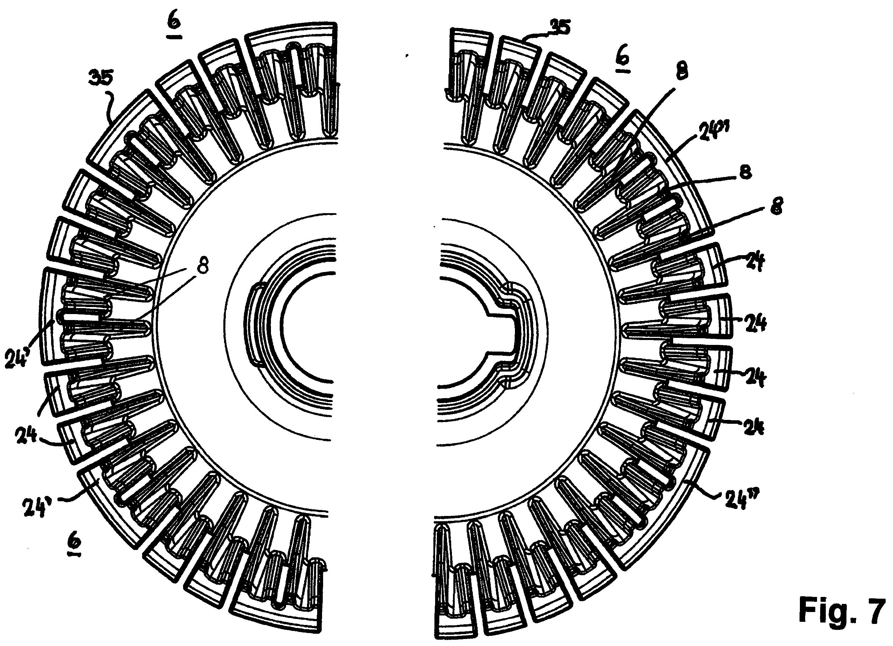

Fig. 7 zeigt in der linken Hälfte einen Abscheider 6, bei dem sich die Rastvorsprünge 24' teilweise über zwei benachbarte Stege 8 hinweg erstrecken. Die Rastvorsprünge 24' sind einstückig mit den Stegen 8 ausgebildet. Die dazwischen liegenden Stege 8 haben wie beim vorigen Ausführungsbeispiel jeweils einen Rastvorsprung, der dann schmaler ist als der zwei benachbarten Stegen 8 zugeordnete Rastvorsprung 24'. Im dargestellten Ausführungsbeispiel ist die Verteilung so vorgesehen, dass zwischen zwei längeren Rastvorsprüngen 24' jeweils zwei schmale Rastvorsprünge 24 angeordnet sind. Die längeren Rastvorsprünge 24' sind hinsichtlich ihrer Form gleich ausgebildet wie die schmaleren Rastvorsprünge 24. Wie beim vorigen Ausführungsbeispiel können die Rastvorsprünge 24, 24', in Achsrichtung gesehen, gerade verlaufende Außenseiten haben. Im dargestellten Ausführungsbeispiel liegen die Außenseiten der Vorsprünge, in Achsrichtung gesehen, auf einem Kreis 35, dessen Mittelpunkt auf der Achse des Abscheiders 6 liegt.

Durch die längeren Rastvorsprünge 24' ergibt sich eine höhere Stabilität des Abscheiders 6. Sämtliche Rastvorsprünge 24, 24' sind, wie anhand des vorigen Ausführungsbeispieles beschrieben, in Eingriff mit dem Ring 31 des Spiders 5.

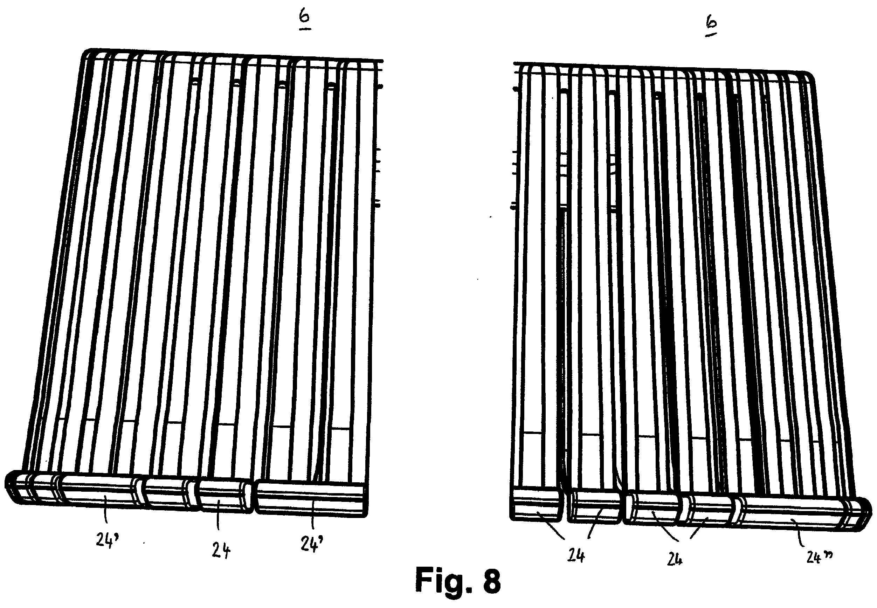

Die rechte Hälfte der Fig. 7 und 8 zeigt eine Ausführungsform, bei der ein Teil der Rastvorsprünge 24" sich über drei Stege 8 hinweg erstreckt, wodurch sich eine noch höhere Stabilität des Abscheiders 6 ergibt. Beispielhaft weist der Abscheider 6 zwischen den Rastvorsprüngen 24" drei Rastvorsprünge 24 auf, die jeweils an einem Steg 8 vorgesehen sind. Die Außenseiten der Rastvorsprünge 24, 24" liegen wiederum auf dem Kreis 35, dessen Mittelpunkt in der Achse des Abscheiders 6 liegt. Sämtliche Rastvorsprünge 24, 24" sind in Eingriff mit dem Ring 31 des Spiders 5. Im Übrigen ist dieser Abscheider gleich ausgebildet wie die vorige Ausführungsform.

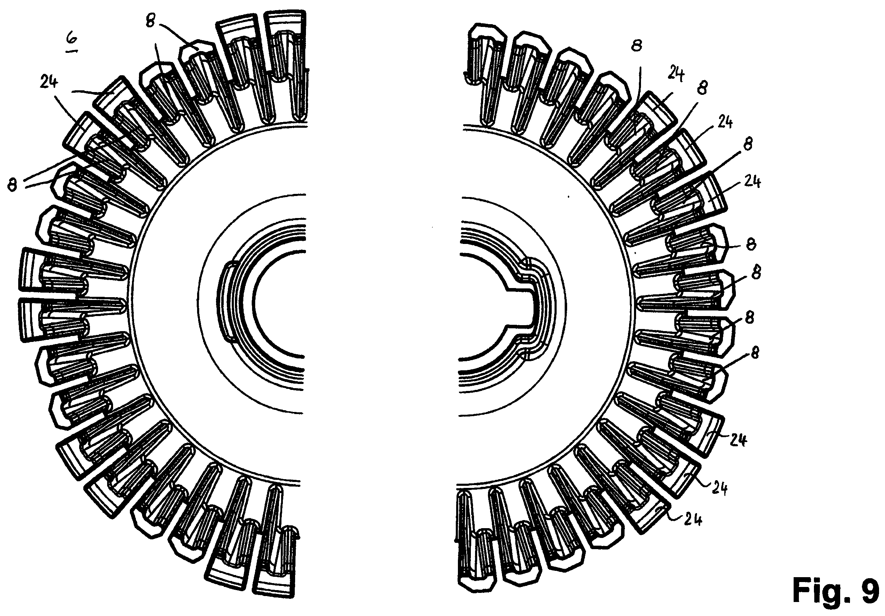

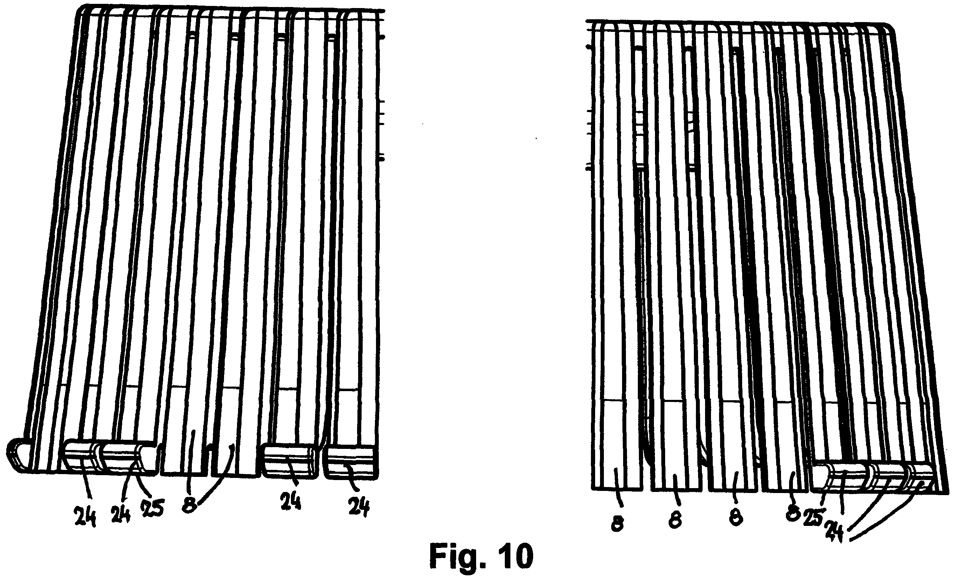

Die Fig. 9 und 10 zeigen Abscheider 6, bei denen nur ein Teil der Stege 8 mit Rastvorsprüngen versehen ist. Der in der linken Hälfte der Fig. 9 und 10 dargestellte Abscheider 6 ist so ausgebildet, dass abwechselnd jeweils zwei Stege 8 ohne Rastvorsprünge und zwei Stege 8 mit den Rastvorsprüngen 24 ausgestattet sind. Diese Verteilung der Rastvorsprünge 24 ist über den gesamten Umfang des Abscheiders 6 vorgesehen. Die Rastvorsprünge 24 sind entprechend der Ausführungsform gemäß den Fig. 3 bis 6 ausgebildet und an den Stegen 8 vorgesehen. Auch auf diese Weise ergibt sich eine sichere Schnappverbindung zwischen dem Abscheider 6 und dem Spider 5. Die Stege 8 ohne Rastvorsprünge liegen in montierter Lage ebenfalls unter Vorspannung an der Innenseite des Ringes 31 des Spiders 5 an. Wie Fig. 10 zeigt, erstrecken sich die Stege 8 ohne Rastvorsprünge so weit, dass ihr freies Ende in Höhe der Unterseite 25 der Rastvorsprünge 24 liegt.

Bei der Ausführungsform der rechten Hälfte der Fig. 9 und 10 sind die Rastvorsprünge 24 an drei nebeneinander liegenden Stegen 8 vorgesehen. In Umfangsrichtung des Abscheiders folgen dann vier Stege 8 ohne Rastvorsprünge. Daran schließen wiederum drei Stege mit einem Rastvorsprung 24 an. Wie beim vorigen Ausführungsbeispiel sind die Stege 8 ohne Rastvorsprünge so lang, dass ihre freien Enden in Höhe der Unterseite 25 der Rastvorsprünge 24 liegen (Fig. 10). Die Rastvorsprünge 24 mit den Stegen 8 sind im Übrigen gleich ausgebildet wie bei der Ausführungsform gemäß den Fig. 3 bis 6. In montierter Lage untergreifen die Rastvorsprünge 24 den Ring 31 des Spiders 5, während die Stege 8 ohne Rastvorsprung unter elastischer Verformung an der Innenseite des Ringes 31 anliegen.

Die Verteilung der Stege mit und ohne Rastkonturen ist in den Fig. 7 bis 10 nur beispielhaft dargestellt. Diese Verteilung kann je nach Einsatzfall des Abscheiders unterschiedlich ausgebildet sein. So können beispielhaft an einem Abscheider Rastkonturen vorgesehen sein, die mit zwei Stegen 8 und die mit drei oder gar vier Stegen 8 einstückig verbunden sind. Dabei können auch Stege 8 ohne Rastkonturen oder Stege 8 vorgesehen werden, die jeweils eine Rastkontur aufweisen. Die beschriebenen Ausführungsbeispiele sind somit nicht als Beschränkung im Hinblick auf die Zahl und/oder Verteilung und/oder Gestaltung der Rastkonturen zu verstehen.

Die Fig. 11 bis 16 zeigen eine Ausführungsform eines Spiders 5, die sich vom Ausführungsbeispiel nach den Fig. 1 und 2 dadurch unterscheidet, dass kein umlaufender Ring 31 für die Rastvorsprünge vorgesehen ist, sondern über den Umfang verteilt angeordnete Rastöffnungen 36. Der Spider 5 hat den Grundkörper 34, der zylindrisch ausgebildet ist und mit dem der Spider 5 drehfest auf der Motorwelle 2 sitzt. Vom Grundkörper 34 stehen radial die flügelartigen Stege 33 ab, die hochkant angeordnet sind und den Grundkörper 34 mit einem Ringflansch 37 verbinden, der den Grundkörper 34 mit radialem Abstand umgibt. Der Ringflansch 37 weist die Öffnungen 36 auf, die beispielhaft in Winkelabständen von 60° längs des Umfanges des Ringflansches 37 vorgesehen sind. Die Stege 33 sind so angeordnet, dass ihre gedachten Verlängerungen durch jeweils eine der Rastöffnungen 36 verlaufen (Fig. 11). Der Ringflansch 37 ist nahe dem in der Einbaulage unteren Ende des Spiders 5 vorgesehen und geht in einen Konuskörper 38 über, der über den Ringflansch 37 nach unten vorsteht (Fig. 12). Der Konuskörper 38 verjüngt sich in Richtung auf sein freies Ende und umgibt den Grundkörper 34, in Axialrichtung des Grundkörpers gesehen, mit radialem Abstand.

Der Grundkörper 34 ist mit einem ringförmigen Vorsprung 39 versehen, der etwa gleichen Außendurchmesser wie der Grundkörper 34 hat und über den Konuskörper 38 nach unten vorsteht. Wie Fig. 2 zeigt, dient der Vorsprung 39 als Zentriermittel, mit dem der Spider 5 auf der Motorwelle 2 zentriert werden kann.

Am gegenüber liegenden Ende ist der Grundkörper 34 mit dem ringförmigen Vorsprung 20 versehen, der mit dem ringförmigen Vorsprung 19 des Abscheiders 6 in der beschriebenen Weise zusammenwirkt. Die Stege 33 erstrecken sich zwischen den beiden ringförmigen Vorsprüngen 20, 39 und verbreitern sich vom Vorsprung 20 aus vorzugsweise stetig bis etwa zum Ring 39.

Über den Vorsprung 20 ragt axial eine Nase 40, die in montierter Lage in die Ausbuchtung 18 des Abscheiders 6 formschlüssig ragt.

Die Rastöffnungen 36 erstrecken sich bis in den Konuskörper 38. Die Rastöffnungen 36 haben teilkreisfömigen Umriss und haben einen solchen Öffnungsquerschnitt, dass beim Aufsetzen des Abscheiders 6 auf den Spider 5 die Rastvorsprünge 24, 24', 24" in die Rastöffnungen 36 gelangen und den Ringflansch 37 im Bereich dieser Rastöffnungen untergreifen. Bei Verwendung des Spiders gemäß den Fig. 11 bis 16 sind die Abscheider so ausgebildet, dass nur die in Höhe der Rastöffnungen 36 liegenden Stege mit den Rastvorsprüngen versehen sind. Die übrigen Stege 8 des Abscheiders haben keine Rastvorsprünge. In der Einbaulage sind sämtliche Stege 8 des Abscheiders 6 radial nach innen elastisch vorgespannt, so dass eine sichere Verbindung zwischen dem Spider 5 und dem Abscheider 6 sichergestellt ist. Über die Nase 40 wird der Abscheider 6 beim Aufsetzen auf den Spider 5 so ausgerichtet, dass die Rastvorsprünge der entsprechenden Stege 8 des Abscheiders zwangsläufig in die Rastöffnungen 36 gelangen.

Der Spider 5 besteht vorteilhaft einstückig aus Kunststoff hergestellt. Die Stege 33 gewährleisten eine ausreichende Festigkeit des Spiders 5.

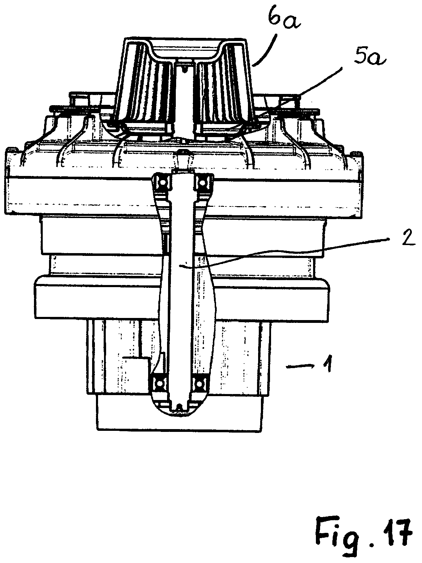

Fig. 17 zeigt eine Ausführungsform des Abscheiders 6a, bei dem die Ausbuchtung 18 nicht vorgesehen ist. Die drehfeste Verbindung zwischen dem Abscheider 6a und dem Spider 5a erfolgt ausschließlich über eine reibschlüssige Verbindung.

Der kegelförmige Boden 12a der Vertiefung 11a des Abscheiders 6a geht in einen radial verlaufenden Bodenabschnitt 12b über, der mittig eine Öffnung 41 aufweist. Sie wird vom Vorsprung 19a begrenzt, der sich vom Rand der Öffnung 41 in Richtung auf den Motor 1 erstreckt. Der Vorsprung 19a dient dazu, den Abscheider 6a auf der Motorwelle 2 axial zu sichern. Der Vorsprung 19a ist zumindest am freien Ende elastisch aufweitbar ausgebildet. Zu diesem Zweck kann der Vorsprung 19a aus wenigstens zwei Zungen bestehen, die federelastisch ausgebildet sind und an ihren freien Enden eine radial nach innen ragende Nase 42 aufweisen. Die Motorwelle 2 ist mit einer Ringnut 43 versehen, in welche die Nasen 42 des Vorsprunges 19a eingreifen. Die Montage des Abscheiders 6a ist einfach möglich, da er lediglich mit dem Vorsprung 19a auf die Motorwelle 2 aufgesteckt werden muss. Die Zungen federn hierbei elastisch auf, bis die Nasen 42 in die Ringnut 43 eingreifen können.

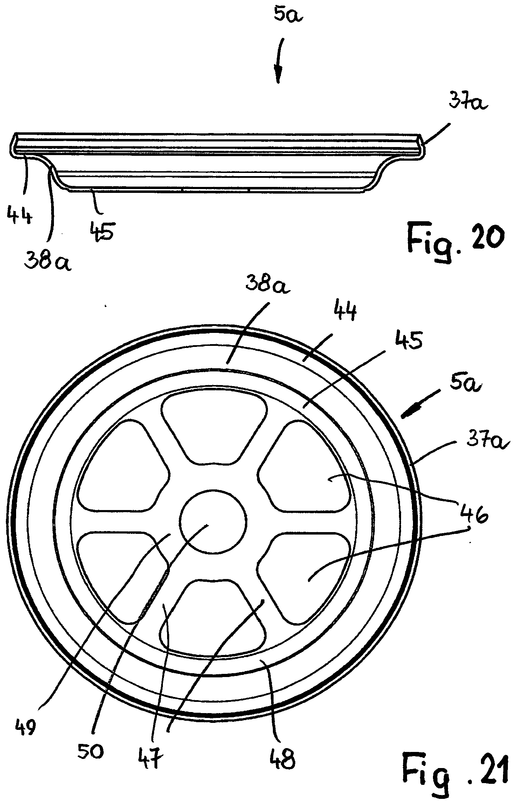

Der Spider 5a hat im Unterschied zur Ausführungsform gemäß den Fig. 11 bis 16 keinen Grundkörper 34 mehr. Er weist vielmehr den umlaufenden Ringflansch 37a auf, der leicht nach innen geneigt ist (Fig. 20). Der Ringflansch 37a geht in einen Radialflansch 44 über, der den Ringflansch 37a mit dem Konuskörper 38a verbindet. Der Konuskörper 38a geht in einen Boden 45 über, der radial zur Achse des Spiders 5a und damit parallel zum Radialflansch 44 verläuft. Der Boden 45 weist über seinen Umfang verteilt Öffnungen 46 auf, die durch radial verlaufende Stege 47 voneinander getrennt sind. Die Stege 47 verbinden einen radial äußeren ringförmigen Bodenabschnitt 48 mit einem radial inneren ringförmigen Bodenabschnitt 49 (Fig. 21). Die beiden ringförmigen Bodenabschnitte 48, 49 liegen koaxial zur Achse des Spiders 5a. Der innere Bodenabschnitt 49 weist eine kreisförmige Öffnung 50 auf, durch welche in der Einbaulage die Motorwelle 2 ragt. Die Öffnung 50 des Spiders 5a hat größeren Durchmesser als die zentrale Öffnung 41 des Abscheiders 6a.

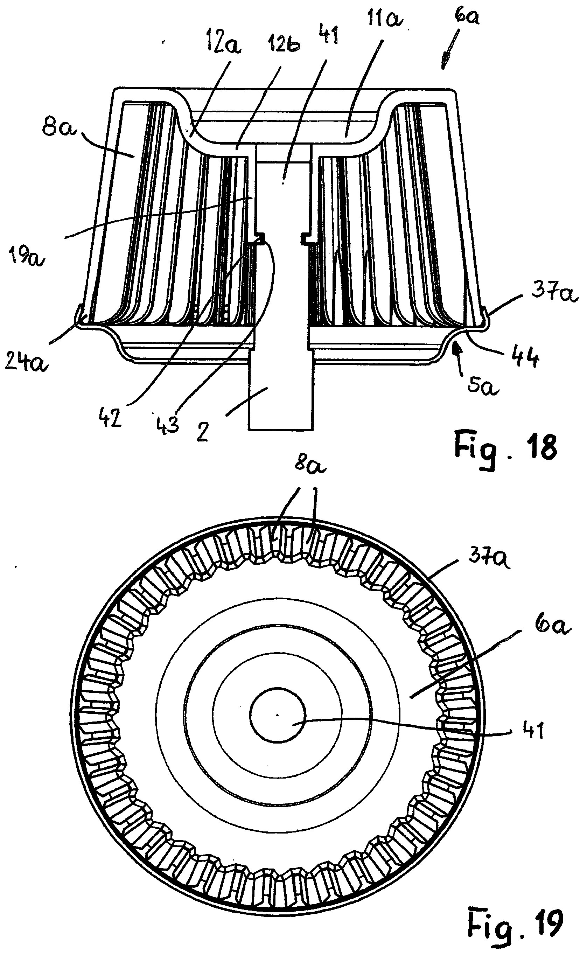

Der Abscheider 6a wird ähnlich wie bei den vorigen Ausführungsformen auf den Spider 5a aufgesetzt, wobei die Stege 8a des Abscheiders zunächst radial elastisch nach innen gebogen werden, damit die Rastkonturen 24a in den vom Ringflansch 37a umschlossenen Raum eingesetzt werden können. Dann federn die Stege 8a wieder radial nach außen, bis die Rastkonturen 24a an der Innenseite des Ringflansches 37a unter radialer Vorspannung anliegen (Fig. 18). Der Abscheider 6a wird so weit auf den Spider 5a aufgesetzt, bis die Rastkonturen 24a am Radialflansch 44 des Spiders 5a anliegen. Der Radialflansch 44 ist so breit, dass er nach innen über die Rastkonturen 24a der Stege 8a ragt. Die Stege 8a können entsprechend den zuvor beschriebenen Ausführungsformen ausgebildet sein.

Im Betrieb des Staubsaugers dreht der Abscheider 6a mit hoher Drehzahl, wodurch auf die Stege 8a hohe Fliehkräfte wirken. Dadurch werden sie mit den Rastkonturen 24a fest gegen die Innenseite des Ringflansches 37a gedrückt. Die Kraft ist hierbei so groß, dass auch ohne Formschlussverbindung in Drehrichtung eine zuverlässige drehfeste Verbindung zwischen dem Abscheider 6a und dem Spider 5a hergestellt wird. Der drehfest auf der Motorwelle 2 sitzende Spider 5a nimmt darum den Abscheider 6a beim Betrieb des Staubsaugers einwandfrei in Drehrichtung mit.

Diese Ausführungsform zeichnet sich durch ihre einfache und kostengünstige Ausbildung aus. Die lediglich reibschlüssige Drehverbindung zwischen dem Abscheider 6a und dem Spider 5a ermöglicht eine einfache konstruktive Gestaltung dieser beiden Bauteile.

Da der Abscheider 6a über den Vorsprung 19a mit den Nasen 42 axial an der Motorwelle 2 gesichert ist, ist es nicht erforderlich, den Abscheider 6a mittels Schrauben und dergleichen an der Motorwelle 2 axial zu sichern. Dies erleichtert die Montage und die Demontage des Abscheiders 6a. Er kann bei Bedarf einfach von der Motorwelle 2 abgezogen werden. Der Abscheider 6a lässt sich auch einfach vom Spider 5a abziehen.

Bei einer (nicht dargestellten) Ausführungsform sind die Stege des Abscheiders am freien Ende nicht mit einer Rastkontur versehen, sondern haben über ihre Länge durchgehend gleichen Querschnitt, wie es beispielhaft in der linken Hälfte der Fig. 10 für die dort dargestellten Stege 8 ohne Rastvorsprung dargestellt ist. Ein solcher Abscheider liegt dann mit seinen Stegen an der Innenseite des nach innen geneigt verlaufenden Ringflansches 37a des Spiders 5a an. Der Ringflansch 37a sowie die Außenseite der Stege des Abscheiders sind so ausgebildet, dass sie über die Höhe des Ringflansches 37a flächig aneinander liegen. Auch auf diese Weise wird im Zusammenwirken mit der hohen Fliehkraft beim Betrieb des Staubsaugers eine zuverlässige Drehmitnahme erreicht, ohne dass eine Formschlussverbindung in Umfangsrichtung bzw. Drehrichtung zwischen dem Abscheider und dem Spider erforderlich wäre. Die Höhe des Ringflansches 37a ist so gewählt, dass die zuverlässige Drehmitnahme des Abscheiders durch den Spider gewährleistet ist.

Haben die Stege 8a die Rastkontur 24a, die beispielhaft als Rastvorsprung ausgebildet ist, dann ist der Ringflansch 37a in vorteilhafter Weise so ausgebildet, dass er den Rastvorsprung 24a übergreift (Fig. 18).

Bei einer anderen Ausführungsform ist es möglich, die Stege 8, 8a des Abscheiders nicht schräg nach außen, sondern senkrecht verlaufend anzuordnen, so dass die Außenseite der Stege auf einem Zylindermantel liegt. Der Ringflansch 37, 37a des Spiders 5, 5a liegt dann ebenfalls auf einem Zylindermantel. Zumindest ein Teil der Stege des Abscheiders ist jeweils mit wenigstens einem Formschlusselement, beispielsweise einer Vertiefung oder einer Erhöhung, versehen, die mit einem entsprechenden Gegenformschlusselement des Ringflansches des Spiders, beispielsweise einem Vorsprung oder einer Vertiefung, versehen ist. Der Außenradius des gedachten Zylinders, auf dem die Außenseiten der Stege 8, 8a des Abscheiders liegen, ist geringfügig kleiner als der Innenradius des Ringflansches 37, 37a. Dadurch lässt sich der Abscheider einfach auf den Spider aufsetzen. Die Formschluss- und Gegenformschlusselemente sind so ausgebildet, dass sie in geringem Maße ineinander greifen. Sobald der Spider und der Abscheider mit der hohen Drehzahl der Motorwelle 2 angetrieben werden, werden die Stege 8, 8a des Abscheiders radial nach außen gedrückt, wodurch der volle Formschluss zwischen den Formschluss/Gegenformschlusselementen erreicht wird. Auch dadurch ist eine zuverlässige Drehmomentmitnahme des Abscheiders durch den Spider gewährleistet.

Der Spider 5a ist wie das vorige Ausführungsbeispiel vorteilhaft einstückig aus Kunststoff hergestellt.

Bedingt durch die gewählte Drehzahl des Abscheiders treten an den Lamellenenden Fliehkräfte auf, die die selbstsichernde Wirkung im Spider bewirken. Bei einer minimalen Drehzahl von ca. 6.000 1/min, wie diese zur Luftreinigung bei Wassersaugern zur Anwendung kommt, tritt abhängig von der gewählten Masse der einzelnen Lamelle eine Fliehkraft von 1,5N - 7N an den Lamellenenden auf. Bei einer maximalen Drehkraft von ca. 25.000 1/min erhöht sich die Fliehkraft abhängig von der Lamellenmasse auf 20-120N an den Auflagerpunkten der Lamellenenden. Durch diese Kräfte wird sichergestellt, dass der Abscheider mit steigender Drehzahl absolut sicher in der Kontur des Spiders fixiert wird. Außerdem bewirken die auftretenden Fliehkräfte an der in den Spider eingreifender Kontur eine hohe Friktionskraft, so dass der Abscheider von dem Spider drehzahlgleich mitgenommen wird. Durch diese Eigenschaft ist es nicht erforderlich, dass am Abscheider und am Spider formschlüssige Kontur(en) angebracht sein müssen. Die angegebenen Werte sind nicht als beschränkend anzusehen.

## Patentansprüche

1. Abscheider für einen Staubsauger, insbesondere einen Nasssauger, mit einem Abdeckteil, von dem Stege abstehen, die unter Bildung von Durchtrittsöffnungen mit Abstand hintereinander längs des Umfangs des Abdeckteiles vorgesehen sind,
**dadurch gekennzeichnet, dass** zumindest einige der Stege (8, 8a) an ihrem vom Abdeckteil (9) abgewandten Ende ohne Verbindung untereinander sind und dass die Stege (8, 8a) quer zu ihrer Längsrichtung elastisch nachgiebig ausgebildet sind.

2. Abscheider nach Anspruch 1,
**dadurch gekennzeichnet, dass** mindestens zwei der Stege (8, 8a) am freien Ende mit wenigstens einer Rastkontur (24, 24', 24", 24a) versehen sind.

3. Abscheider nach Anspruch 2,
**dadurch gekennzeichnet, dass** die Rastkontur (24, 24', 24", 24a) in Umfangsrichtung des Abscheiders (6, 6a) gleiche Breite wie der Steg (8, 8a) hat.

4. Abscheider nach Anspruch 2,
**dadurch gekennzeichnet, dass** sich die Rastkontur (24, 24', 24", 24a) über wenigstens zwei benachbarte Stege (8, 8a) erstreckt.

5. Abscheider nach einem der Ansprüche 2 bis 4,
**dadurch gekennzeichnet, dass** die Rastkontur (24, 24', 24", 24a) einstückig mit dem Steg (8, 8a) ausgebildet ist.

6. Abscheider nach einem der Ansprüche 2 bis 5,
**dadurch gekennzeichnet, dass** die Rastkontur (24, 24' 24", 24a) ein Rastvorsprung ist, der vorteilhaft eine Schrägfläche (26) aufweist, die an der vom Steg (8) abgewandten Seite des Rastvorsprunges (24, 24', 24", 24a) vorgesehen ist.

7. Abscheider nach Anspruch 6,
**dadurch gekennzeichnet, dass** der Rastvorsprung (24, 24', 24", 24a) eine dem Steg (8) zugewandte Sperrfläche (28) aufweist.

8. Abscheider nach Anspruch 1,
**dadurch gekennzeichnet, dass** die Stege (8, 8a) zumindest am freien Ende einen konstanten Querschnitt aufweisen.

9. Abscheider nach einem der Ansprüche 1 bis 8,
**dadurch gekennzeichnet, dass** die Stege (8, 8a) vom Abdeckteil (9) aus schräg nach außen gerichtet sind oder auf einem Zylindermantel liegen.

10. Abscheider nach einem der Ansprüche 1 bis 9,
**dadurch gekennzeichnet, dass** der Abscheider (6) mit wenigstens einnem Formschlusselement (18) versehen ist.

11. Abscheideeinrichtung mit einem Spider und einem Abscheider nach einem der Ansprüche 1 bis 10,
**dadurch gekennzeichnet, dass** der Spider (5, 5a) wenigstens ein Mitnahmeelement (31, 37, 37a) aufweist, an dem die Stege (8, 8a) des Abscheiders (6, 6a) im Betrieb unter Radialkraft anliegen.

12. Abscheideeinrichtung nach Anspruch 11,
**dadurch gekennzeichnet, dass** das Mitnahmeelement (31) als Ring ausgebildet ist, der von der Rastkontur (24, 24', 24", 24a) untergriffen wird.

13. Abscheideeinrichtung nach Anspruch 11,
**dadurch gekennzeichnet, dass** das Mitnahmeelement (37) ein Ringflansch ist, der mit Rastöffnungen (36) für die Rastkonturen (24, 24', 24", 24a) versehen ist.

14. Abscheideeinrichtung nach Anspruch 11,
**dadurch gekennzeichnet, dass** das Mitnahmeelement (37a) ein Ringflansch ist, dessen Wandung radial nach innen geneigt ist, und dass vorteilhaft die Stege (8, 8a) des Abscheiders (6, 6a) flächig an der Innenseite des Ringflansches (37a) anliegen.

15. Abscheideeinrichtung nach einem der Ansprüche 11 bis 14,
**dadurch gekennzeichnet, dass** der Abscheider (6) und der Spider (5) miteinander zusammenwirkende Zentrierteile (19, 20) aufweisen, mit denen der Abscheider (6) und der Spider (5) axial zueinander ausgerichtet werden, und dass die Zentrierteile (19, 20) vorteilhaft ringförmige Vorsprünge sind, deren Achse in der Achse des Spiders (5) und des Abscheiders (6) liegt.

16. Staubsauger, insbesondere Nasssauger, mit einem Abscheider (6, 6a) nach einem der Ansprüche 1 bis 10.

17. Staubsauger, insbesondere Nasssauger, mit einer Abscheideeinrichtung nach einem der Ansprüche 11 bis 15.

## Claims

1. A separator for a vacuum cleaner, in particular a suction apparatus for liquids, having a cover part, from which webs stick out, which are provided spaced from one another along the circumference of the cover part with the formation of through openings,
**characterised in that** at least some of the webs (8, 8a) are not connected to one another at the end thereof facing away from the cover part (9) and **in that** the webs (8, 8a) are constructed to be elastically flexible transversely to the longitudinal direction thereof.

2. The separator according to Claim 1,
**characterised in that** at least two of the webs (8, 8a) are provided with at least one latching contour (24, 24', 24'', 24a) at the free end.

3. The separator according to Claim 2,
**characterised in that** the latching contour (24, 24', 24'', 24a) has the same width as the web (8, 8a) in the circumferential direction of the separator (6, 6a).

4. The separator according to Claim 2,
**characterised in that** the latching contour (24, 24', 24'', 24a) extends over at least two adjacent webs (8, 8a).

5. The separator according to one of Claims 2 to 4, **characterised in that** the latching contour (24, 24', 24'', 24a) is constructed in one piece with the web (8, 8a).

6. The separator according to one of Claims 2 to 5,
**characterised in that** the latching contour (24, 24', 24'', 24a) is a latching projection, which advantageously has a bevel (26), which is provided on the side of the latching contour (24, 24', 24'', 24a) facing away from the web (8).

7. The separator according to Claim 6,
**characterised in that** the latching projection (24, 24', 24'', 24a) has a locking face (28) facing the web (8).

8. The separator according to Claim 1,
**characterised in that** the webs (8, 8a) have a constant cross section at least at the free end.

9. The separator according to one of Claims 1 to 8,
**characterised in that** the webs (8, 8a) are directed obliquely outwards starting from the cover part (9) or rest on a cylinder jacket.

10. The separator according to one of Claims 1 to 9,
**characterised in that** the separator (6) is provided with at least one positive-fitting element (18).

11. A separating device with a spider and a separator according to one of Claims 1 to 10,
**characterised in that** the spider (5, 5a) has at least one entraining element (31, 37, 37a), against which the webs (8, 8a) of the separator (6, 6a) bear under radial force during operation.

12. The separating device according to Claim 11,
**characterised in that** the entraining element (31) is constructed as a ring, below which the latching contour (24, 24', 24' ', 24a) engages.

13. The separating device according to Claim 11,
**characterised in that** the entraining element (37) is an annular flange, which is provided with latching openings (36) for the latching contours (24, 24', 24'', 24a).

14. The separating device according to Claim 11,
**characterised in that** the entraining element (37a) is an annular flange, the wall of which is inclined radially inwards, and **in that** the webs (8, 8a) of the separator (6, 6a) bear flat against the inside of the annular flange (37a).

15. The separating device according to one of Claims 11 to 14,
**characterised in that** the separator (6) and the spider (5) have mutually interacting centring parts (19, 20), using which the separator (6) and the spider (5) are orientated axially to one another, and **in that** the centring parts (19, 20) are advantageously annular projections, the axis of which lies in the axis of the spider (5) and the separator (6).

16. A vacuum cleaner, particularly a suction apparatus for liquids, having a separator (6, 6a) according to one of Claims 1 to 10.

17. A vacuum cleaner, particularly a suction apparatus for liquids, having a separating device according to one of Claims 11 to 15.

## Revendications

1. Séparateur pour aspirateur, notamment aspirateur à eau, comprenant une partie de couvercle, duquel des cannelures font saillie, qui sont prévues à distance l'une derrière l'autre sur le pourtour de la partie de couvercle, en formant des ouvertures de passage,
**caractérisé en ce qu'**au moins quelques-unes des barres (8, 8a) sont sans liaison entre elles sur leur extrémité détournée de la partie de couvercle (9) et que les barres (8, 8a) sont formées en étant élastiquement flexible transversalement à leur sens longitudinal.

2. Séparateur selon la revendication 1,
**caractérisé en ce qu'**au moins deux des barres (8, 8a) sont dotées d'au moins un contour d'encliquetage (24, 24', 24'', 24a) sur l'extrémité libre.

3. Séparateur selon la revendication 2,
**caractérisé en ce que** le contour d'encliquetage (24, 24', 24'', 24a) présente la même largeur que la barre (8, 8a) dans le sens périphérique du séparateur (6, 6a).

4. Séparateur selon la revendication 2,
**caractérisé en ce que** le contour d'encliquetage (24, 24', 24'', 24a) s'étend sur au moins deux barres (8, 8a) adjacentes.

5. Séparateur selon l'une des revendications 2 à 4,
**caractérisé en ce que** le contour d'encliquetage (24, 24', 24'', 24a) est formé d'une seule pièce avec la barre (8, 8a).

6. Séparateur selon l'une des revendications 2 à 5,
**caractérisé en ce que** le contour d'encliquetage (24, 24', 24'', 24a) est une saillie d'encliquetage, qui présente avantageusement une surface oblique (26) qui est prévue sur le côté du contour d'encliquetage (24, 24', 24'', 24a) détourné de la barre (8).

7. Séparateur selon la revendication 6,
**caractérisé en ce que** la saillie d'encliquetage (24, 24', 24'', 24a) présente une surface de blocage (28) tournée vers la cannelure (8).

8. Séparateur selon la revendication 1,
**caractérisé en ce que** les barres (8, 8a) présentent une section constante au moins sur l'extrémité libre.

9. Séparateur selon l'une des revendications 1 à 8,
**caractérisé en ce que** les barres (8, 8a) sont dirigées de biais vers l'extérieur depuis la partie de couvercle (9) ou reposent sur une enveloppe de cylindre.

10. Séparateur selon l'une des revendications 1 à 9,
**caractérisé en ce que** le séparateur (6) est doté d'au moins un élément de liaison géométrique (18).

11. Dispositif de séparation comprenant un spider et un séparateur selon l'une des revendications 1 à 10, **caractérisé en ce que** l'spider (5, 5a) présente au moins un élément entraînement (31, 37, 37a) sur lequel les barres (8, 8a) du séparateur (6, 6a) reposent par une force radiale en service.

12. Dispositif de séparation selon la revendication 11,
**caractérisé en ce que** l'élément entraînement (31) est formé en tant que bague qui est prise par le dessous par le contour d'encliquetage (24, 24', 24'', 24a).

13. Dispositif de séparation selon la revendication 11,
**caractérisé en ce que** l'élément entraînement (37) est une bride annulaire qui est dotée d'ouvertures d'encliquetage (36) pour les contours d'encliquetage (24, 24', 24'', 24a).

14. Dispositif de séparation selon la revendication 11,
**caractérisé en ce que** l'élément entraînement (37a) est une bride annulaire dont la paroi est inclinée radialement vers l'intérieur et qu'avantageusement, les barres (8, 8a) du séparateur (6, 6a) reposent de façon plane sur la face intérieure de la bride annulaire (37a).

15. Dispositif de séparation selon l'une des revendications 11 à 14,
**caractérisé en ce que** le séparateur (6) et le spider (5) présentent des pièces de centrage (19, 20) coopérant entre elles, avec lesquelles le séparateur (6) et le spider (5) sont alignés axialement l'un par rapport à l'autre, et que les pièces de centrage (19, 20) sont avantageusement des saillies annulaires dont les axes reposent dans l'axe du spider (5) et du séparateur (6).

16. Aspirateur, notamment aspirateur à eau, comprenant un séparateur (6, 6a) selon l'une des revendications 1 à 10.

17. Aspirateur, notamment aspirateur à eau, comprenant un dispositif de séparation selon l'une des revendications 11 à 15.
